# EUROPEAN PATENT SPECIFICATION

(11) **EP 1 693 179 B1**
(45) Date of publication and mention of the grant of the patent: **15.09.2010**
(21) Application number: 06250815.5
(22) Date of filing: 16.02.2006
(51) Int. Cl.: B29C 69/02, B29C 49/04, B29C 65/02, B60K 15/04

(54) **Method of coupling a component to a fuel fill tube**
Verfahren zum Verbinden eines Bauteils mit einem Kraftstoffeinfüllstutzen
Méthode pour connecter un élément à un tube de remplissage de carburant

(30) Priority: 17.02.2005 US 653833 P
(43) Date of publication of application: 23.08.2006
(73) Proprietor: Stant USA Corp., Connersville, IN 47331 (US)
(72) Inventor: McClung, Chad A., Connersville Indiana IN 47331 (US)
(74) Representative: Croston, David

(56) References cited:
- JP-A- 4 179 528
- US-A- 5 308 427

## Description

This application claims priority under 35 U.S.C. § 119(e) to U.S. Provisional Application Serial No. 60/653,833, filed February 17, 2005,.

### BACKGROUND

The present disclosure relates to blow-molding methods, and particularly to methods of coupling a component to an element formed in a blow mold. More particularly, the present disclosure relates to formation of a fuel tank filler neck using a blow-molding process. Example blow-molding methods may be found in JP04179528 and US5308427.

### SUMMARY

In accordance with the present invention, there is provided a method of coupling a component to a fuel fill tube according to claim 1.

A vacuum is used to draw a hot parison into a mold cavity and inflation air is blown into a central passageway formed in the hot parison to inflate the parison in the mold cavity. A first filler neck component (e.g., an inlet cup) is mated to a first end of the hot parison in the mold cavity to melt a portion of the first filler neck component and bond the first filler neck component to the first end of the hot parison. A second filler neck component (e.g., an inlet check valve) is mated to a second end of the hot parison in the mold cavity to melt a portion of the second filler neck component and bond the second filler neck component to the second end of the hot parison.

Features of the present disclosure will become apparent to those skilled in the art upon consideration of the following detailed description of illustrative embodiments exemplifying the best mode of carrying out the disclosure as presently perceived.

### BRIEF DESCRIPTION OF THE DRAWINGS

The detailed description particularly refers to the accompanying figures in which:
Fig. 1 is a perspective view of a fuel tank coupled to a tank filler neck including an inlet cup and closure cap at an outer end of the filler neck and an inlet check valve at an inner end of the filler neck;
Fig. 2 is a sectional view showing a "closed" blow mold in accordance with the present disclosure and showing an extruded uninflated parison located in a mold cavity formed between first and second mold dies and showing an inlet cup arranged to be mated with an upper end of the parison and an inlet check valve arranged to be mated with a lower end of the parison;
Fig. 3 is a sectional view similar to Fig. 2 after "inflation air" has been blown into the closed blow mold to inflate the parison deployed in the mold cavity and showing the inlet cup after it has been mated with the upper end of the inflated parison and the inlet check valve after it has been mated with the lower end of the inflated parison;
Fig. 4 is an enlarged sectional view showing a fixture moving toward the closed blow mold and carrying an inlet cup to be mated with an upper end of the inflated parison located in the closed blow mold;
Fig. 5 is a view similar to Fig. 4 showing the inlet cup mated to the parison before withdrawal of the fixture from the inlet cup and from the closed blow mold; and
Fig. 6 is a view similar to Figs. 4 and 5 of another embodiment in accordance with the present disclosure wherein a vacuum is used to draw a parison to mate with an inlet cup positioned as an "insert" in a mold.

### DETAILED DESCRIPTION OF THE DRAWINGS

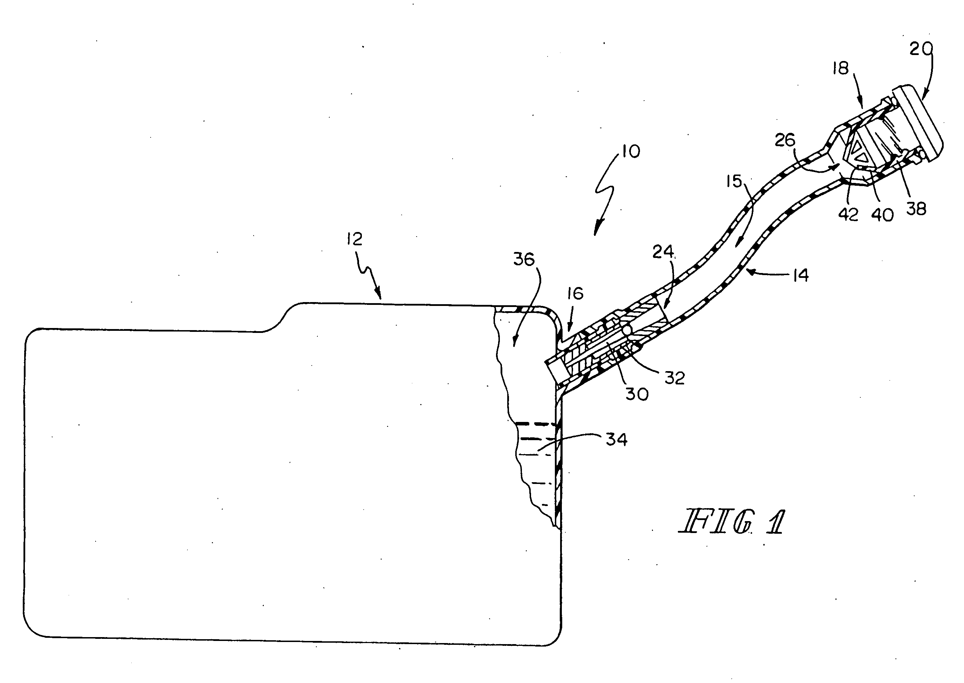

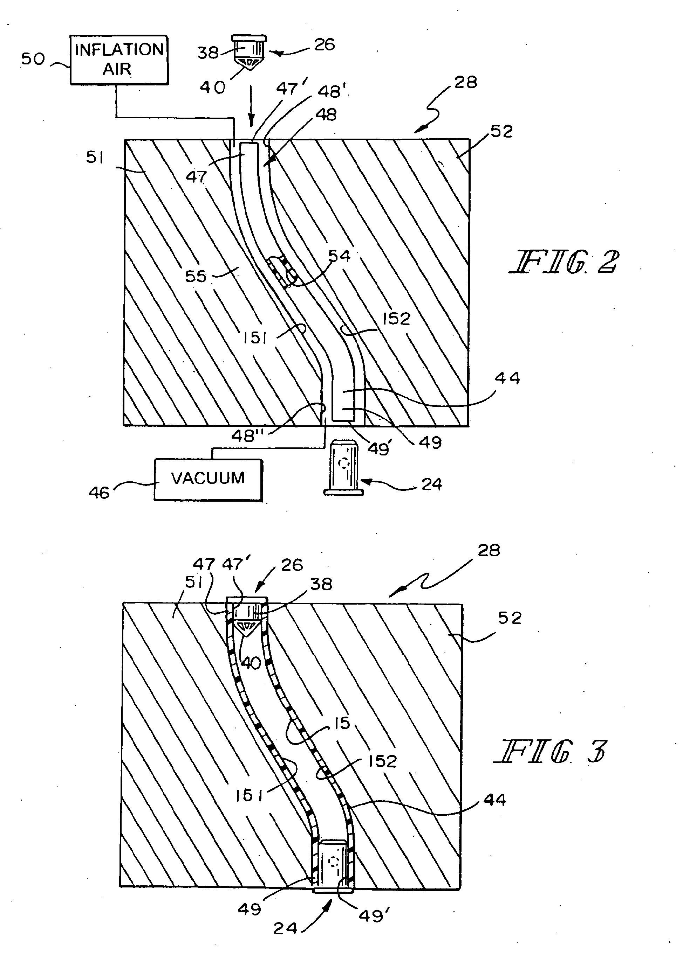

A vehicle fuel system 10 comprises a fuel tank 12, a filler neck 14 having a lower end 16 coupled to fuel tank 12 and an upper end 18, and a removable closure cap 20 coupled to upper end 18 of filler neck 14 to close an open mouth 22 formed in the upper end of filler neck 14 as shown, for example, in Fig. 1. Vehicle fuel system 10 also comprises an inlet check valve 24 and an inlet cup 26 coupled to filler neck 14 as filler neck 14 is formed in a blow mold 28 using methods disclosed herein as suggested, for example, in Fig. 2 and 3.

Inlet check valve 24 is configured to lie in a fuel-conducting passageway 15 formed in filler neck 14 and regulate flow of liquid fuel and fuel vapor therethrough. In the illustrated embodiment, inlet check valve 24 includes a "oneway" valve member 30 that is slidable between a passageway-closing position shown in Fig. 1 and a passageway-opening position (not shown). During refueling, liquid fuel discharged into an "open" filler neck 14 by a fuel-dispensing pump nozzle (not shown) contacts and moves valve member 30 inwardly against a yieldable biasing spring 32 to assume the opened position so that liquid fuel can flow past the one-way valve member 30 and into a fuel reservoir 34 provided in an interior region 36 of fuel tank 12. Reference is made to U.S. Patent No. 5,568,828 and Application No. 10/810,982, filed March 26, 2004, for disclosures relating to vehicle fuel systems and inlet check valves.

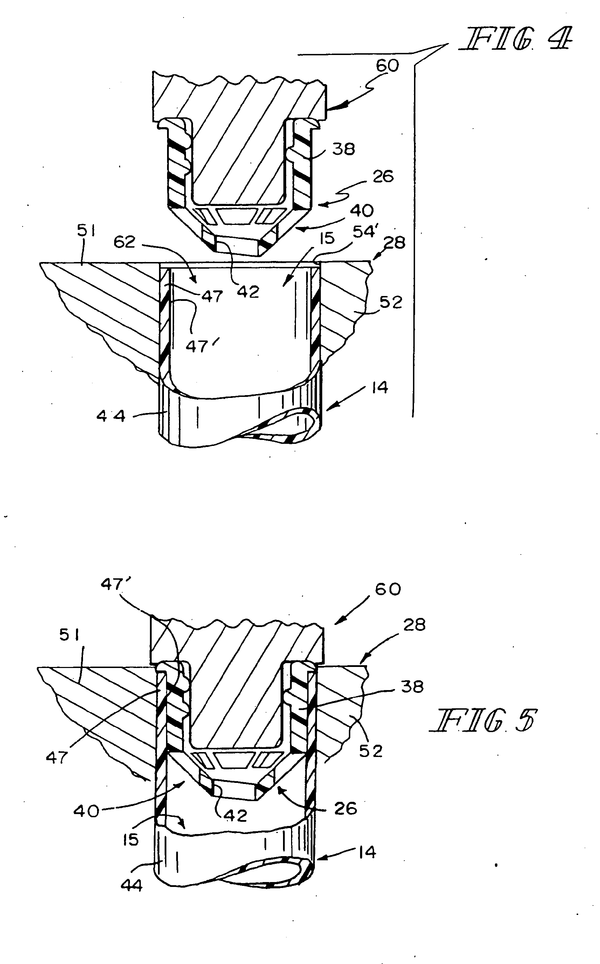

Inlet cup 26 includes a mount 38 and a nozzle restrictor 40 coupled to mount 38 and formed to include an aperture 42 as shown, for example, in Figs. 1 and 4. Mount 38 is coupled to outer end 18 of filler neck 14 by any suitable means and is sized to receive an inner portion of closure cap 20 therein. Aperture 42 is sized to receive a dispensing portion of a pump nozzle (not shown) therein during tank refueling.

As suggested, for example, in Fig. 2, a hot extruded uninflated parison 44 is drawn using a vacuum 46 through an elongated mold cavity 48 defined by first and second mold dies 51, 52. These mold dies 51, 52 are included in blow mold 28 and are shown in a "closed" position in Figs. 2-5. It is within the scope of the present disclosure to apply vacuum 46 to elongated mold cavity 48 via either first opening 48' or second opening 48".

As suggested in Figs. 2 and 3, inflation air 50 is blown into a central passageway 54 formed in hot extruded parison 44 to inflate parison 44 while parison 44 is deployed in the closed mold cavity 48. As suggested, for example, in Fig. 3, inflation air 50 expands the thin-walled hot-extruded parison 44 in radially outwardly extending directions to mate With half-round surfaces 151, 152 (or any other suitable surfaces) formed in first and second mold dies 51, 52. While parison 44 is hot, a component such as inlet check valve 24, inlet cup 26, or other suitable element is mated with parison 44 as suggested in Fig. 3 to cause a portion of the component contacting the hot parison 44 to "melt" so that a bond will develop between parison 44 and the mating component as the "hot" materials comprising parison 44 and the mating component solidify as they cool.

Means is provided for moving a component to mate with a portion of a hot parison 44 to cause a bond to be established between parison 44 and that component. As suggested, for example, in Figs. 4 and 5, a fixture 60 is provided to carry inlet cup 26 into open mouth 62 of the inflated, hot, extruded parison 44 and hold inlet cup 26 in open mouth 62 until the plastics material comprising mount 38 of inlet cup 26 bonds to parison 44. After cooling has been completed, fixture 60 is withdrawn, leaving inlet cup 26 mated with inflated parison 44 as shown, for example, in Fig. 3.

In an illustrative embodiment, parison 44 is made of polyarylamide (PAA). Parison 44 could also be made of liquid crystalline polyethylene (LCP). PAA is suitable for blow-molding. LCP is a low-permeation material suitable for blow-molding. Exterior portions of mount 38 can be made of PAA, LCP, or some suitable material that bonds to PAA, LCP, or the material used to make parison 44.

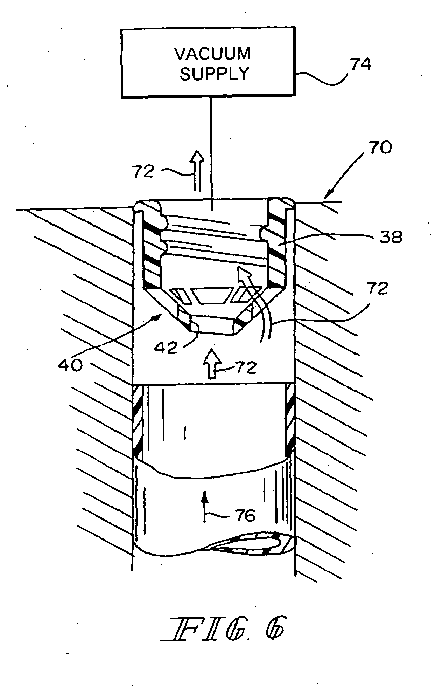

In other embodiments, mount 38 of inlet cup 26 is made of polyethylene or a combination of polyethylene and acetal. It is within the scope of this disclosure to position inlet cup 26 as an insert in a mold 70 and draw a vacuum 72 using vacuum supply 74 through inlet cup 26 via openings formed in nozzle restrictor 40 to move parison 44 in direction 76 to mate inlet cup 26 to a parison in the mold as suggested diagrammatically in Fig. 6.

By mating and bonding a component such as inlet cup 26 to parison 44 while parison 44 is located in a closed mold 28, secondary processes are not needed to couple an inlet cup to a filler neck after the filler neck is removed from a mold. Inlet cup 26 is mated and bonded to parison 44 to yield a more robust joint or union between inlet cup 26 and parison 44. An o-ring seal between inlet cup 26 and filler neck 14 may or may not be needed.

A method of coupling a component to a fuel fill tube in accordance with the present disclosure comprises the steps of providing an elongated mold cavity 48 between a first mold die 51 mated to a second mold die 52, and using a vacuum 46 to draw a hot extruded parison 44 into elongated mold cavity 48 as suggested in Fig. 2. Hot extruded parison 44 is formed to include opposite first and second ends 47, 49 and a central passageway 54 extending therethrough between first and second ends 47, 49.

The present method further comprises the steps of blowing inflation air 50 through an opening 47' formed in first end 47 into central passageway 54 to inflate hot extruded parison 44 while hot extruded parison 44 is located in elongated mold cavity 48 and mating a first filler neck component 26 to first end 47 of hot extruded parison 44 after inflation of hot extruded parison 44. It is also within the scope of the present disclosure to blow inflation air 50 through an opening 49' formed in second end 49 to enlarge opening 47' in first end 47 to receive first filler neck component 26 therein. The mating step occurs while parison material comprising hot extruded parison 44 that has been heated to a hot temperature above a melting point of component material comprising first filler neck component 26 to (1) transfer heat associated with hot extruded parison 44 to first filler neck component 26 to melt some of the component material included in first filler neck component 26 and (2) cause said some of the component material to mate with parison material in hot extruded parison 44 so that a bond develops between mating portions of hot extruded parison 44 and first filler neck component 26 as hot extruded parison 44 and first filler neck component 26 cool to anchor first filler neck component 26 to the parison 44.

The mating step further comprises the steps of mounting first filler neck component 26 on a fixture 60 and moving fixture 60 into central passageway 54 formed in hot extruded parison 44 through an opening 47' formed in first end 47 of hot extruded parison 44 to deposit a portion of the first filler neck component 26 in the central passage to facilitate transfer of heat from parison material in hot extruded parison 44 to component material of first filler neck component 26' located in central passageway 54 of hot extruded parison 44 as suggested in Figs. 4 and 5. The mating step further comprises the step of separating fixture 60 from first filler neck component 26 after parison 44 and component materials have cooled and bonded to anchor first filler neck component 26 to parison 44.

The using step further comprises the steps of introducing a hot extruded parison 44 into elongated mold cavity 48 through a first cavity inlet 48' formed in one end of elongated mold cavity 48 while first mold die 51 is mated to second mold die 52 and applying a vacuum 46 to hot extruded parison 44 through a second cavity inlet 48" formed in an opposite end of elongated mold cavity 48 while first mold die 51 is mated to second mold die 52 to move hot extruded parison through elongated mold cavity 48 in a direction 55 toward second cavity inlet 48 " as suggested in Fig. 2. The applying step ends before the blowing step begins in an illustrative embodiment. Inflation air 50 is blown through first cavity inlet 48' into central passageway 54 of hot extruded parison 44.

A second filler neck component 24 is mated to second end 49 of hot extruded parison 44 after inflation of hot extruded parison 44 as suggested in Figs. 2 and 3. This mating step occurs while parison material comprising the hot extruded parison has been heated to a hot temperature above a melting point of component material comprising second filler neck component 24 to (1) transfer heat associated with hot extruded parison 44 to second filler neck component 24 to melt some of the component material included in second filler neck component 24 and (2) cause said some of the component material to mate with parison material in hot extruded parison 44 so that a bond develops between mating portions of hot extruded parison 44 and second filler neck component 24 as hot extruded parison 44 and second filler neck component 24 cool to anchor second filler neck component 24 to parison 44. It is within the scope of the present disclosure to blow inflation air 50 through opening 49' formed in second end 49 of parison 44 to enlarge opening 49' to receive second filler neck component 24 therein.

## Claims

1. A method of coupling a component to a fuel fill tube, the method comprising the steps of
providing an elongated mold cavity (48) between a first mold die (51) mated to a second mold die (52),
using a vacuum (46) to draw a hot extruded parison (44) into the elongated mold cavity, the hot extruded parison (44) being formed to include opposite first (47) and second (49) ends and a central passageway extending therethrough between the first (47) and second ends (49),
blowing inflation air into the central passageway to inflate the hot extruded parison (44) while the hot extruded parison (44) is located in the elongated mold cavity (48), and **characterised in**
mating a first filler neck component (26) to the first end (47) of the hot extruded parison (44) after inflation of the hot extruded parison (44), the parison material forming the hot extruded parison (44) having been heated to a temperature above a melting point of component material forming the first filler neck component (26), to transfer heat associated with the hot extruded parison (44) to the first filler neck component (26) to melt some of the component material included in the first filler neck component (26) and cause said some of the component material to mate with parison material in first end (47) of the hot extruded parison (44) so that a bond develops between mating portions of the hot extruded parison (44) and the first filler neck component (26) as the hot extruded parison (44) and the first filler neck component (26) cool to anchor the first filler neck component (26) to the first end (47) of the parison.

2. The method of claim 1, further comprising the step of mating a second filler neck component (24) to the second end (49) of the hot extruded parison (44) after inflation of the hot extruded parison (44), while parison material comprising the hot extruded parison (44) that has been heated to a hot temperature above a melting point of component material comprising the second filler neck component (24), to transfer heat associated with the hot extruded parison (44) to the second filler neck component (24) to melt some of the component material included in the second filler neck component (24) and cause said some of the component material to mate with parison material in the second end (49) of the hot extruded parison (44) so that a bond develops between mating portions of the hot extruded parison (44) and the second filler neck component (24) as the hot extruded parison (44) and the second filler neck component (24) cool to anchor the second filler neck component to the second end (49) of the parison.

3. The method of claim 1, wherein the mating step further comprises the steps of mounting the first filler neck component (26) on a fixture (60) and moving the fixture (60) into the central passageway formed in the hot extruded parison (44) through an opening formed in the first end of the hot extruded parison (44) to deposit a portion of the first filler neck component in the central passage to facilitate transfer of heat from parison material in the hot extruded parison (44) to component material of the first filler neck component located in the central passageway of the hot extruded parison (44).

4. The method of claim 3, wherein the mating step further comprises the step of separating the fixture (60) from the first filler neck component (26) after the parison (44) and component materials have cooled and bonded to anchor the first filler neck component (26) to the parison (44).

5. The method of claim 1, wherein the using step further comprises the steps of introducing a hot extruded parison (44) into the elongated mold cavity (48) through a first cavity inlet formed in one end of the elongated mold cavity (48) while the first mold die (51) is mated to the second mold die (52) and applying a vacuum (46) to the hot extruded parison (44) through a second cavity inlet (48") formed in an opposite end of the elongated mold cavity while the first mold die (51) is mated to the second mold die (52) to move the hot extruded parison (44) through the elongated mold cavity (48) in a direction toward the second cavity inlet (48").

6. The method of claim 5, wherein the applying step ends before the blowing step begins and wherein inflation air (50) is blown through the first cavity inlet into the central passageway (54) of the hot extruded parison (44).

7. The method of claim 1, wherein each of the first (51) and second (52) mold dies include a half-round surface forming a boundary portion of the elongated mold cavity and wherein the inflation air (50) expands the hot extruded parison (44) in radially outwardly extending directions to mate with the half-round surfaces of the first (51) and second (52) mold dies while the first mold die (51) is mated with the second mold die (52).

8. The method of claim 7, wherein the mating step further comprises the steps of mounting the first filler neck component (26) on a fixture (60) and moving the fixture (60) into the central passageway (54) formed in the hot extruded parison (44) through an opening formed in the second end (49) of the hot extruded parison (44) to deposit a portion of the first filler neck in the central passage (54) to facilitate transfer of heat from parison material in the hot extruded parison (44) to component material of the first filler neck component (26) located in the central passageway (54) of the hot extruded parison (44).

9. The method of claim 8, wherein the mating step further comprises the step of separating the fixture (60) from the first filler neck component (26) after the parison and component materials have cooled and bonded to anchor the filler neck component (26) to the parison (44).

10. The method of claim 1, wherein the first filler neck component (26) is an inlet cup including a mount (38) and a nozzle restrictor (40) coupled to the mount and formed to include an aperture (42), and exterior portions of the mount (38) are made of a low-permeation material that bonds to a low-permeation material used to make the hot extruded parison (44).

11. The method of claim 10, wherein the low permeation material of the exterior portions of the mount and the low permeation material used to make the hot parison (44) includes liquid crystalline polyethylene.

12. The method of claim 1, wherein the materials comprising the hot parison (44) and the first filler neck component (26) include low-permeation materials suitable for blow molding.

13. The method of claim 1, further comprising the step of providing a second component (24) and wherein the bonding step comprises the step of providing first (51) and second (52) mold dies lying in mating relation to one another and cooperating to form a portion of the closed blow mold (28) and a mold cavity therebetween, the first and second mold dies each including a surface facing toward the hot parison (44) and the other mold die, and the bonding step further comprises the steps of inflating the hot parison (44) in radially outwardly extending directions to mate with the surfaces formed in the first and second mold dies and, while the parison is hot, mating the first component (26) with an upper end of the hot parison (44) and mating the second component (24) with a lower end of the hot parison (44) to cause a portion of the first and second components contacting the hot parison (44) to melt so that a bond develops between the hot parison (44) and each of the first and second components as hot materials comprising the parison and the first and second components solidify as they cool.

14. The method of claim 13, wherein the first component (26) is an inlet cup, the second component (24) is an inlet check valve, and the materials comprising the hot parison (44), the inlet cup, and the inlet check valve include low-permeation materials suitable for blow molding and suitable for bonding the inlet cup and the inlet check valve to the hot parison (44).

15. The method of claim 14, wherein the inlet cup (26) is made of one or more of polyethylene and acetal, and the hot parison (44) is made of liquid crystalline polyethylene.

16. The method of claim 1, wherein the bonding step comprises the step of providing first (51) and second (52) mold dies lying in mating relation to one another and cooperating to form a portion of the closed blow mold (28) and a mold cavity between the mold dies, the first (51) and second (52) mold dies each including a surface facing toward the other mold die, and the bonding step further comprises the steps of positioning the first component (26) as an insert in the closed blow mold (28) and drawing a vacuum through the first component (26) to mate the first component to the hot parison (44) in the closed blow mold.

## Patentansprüche

1. Verfahren zum Verbinden eines Bauteils mit einem Kraftstoff-Füllstutzen, umfassend die folgenden Schritte:
Bereitstellen eines länglichen Formenhohlraums (48) zwischen einem ersten Gesenk (51), das das Gegenstück.zu einem zweiten Gesenk (52) bildet;
anwenden eines Vakuums (46), um einen heißen extrudierten Vorformling (44) in den länglichen Formenhohlraum zu ziehen, wobei der heiße extrudierte Vorformling mit einem ersten Ende (47) und einem gegenüberliegenden zweiten Ende (49) und einem sich durch ihn hindurch erstreckenden Durchgang zwischen dem ersten Ende (47) und
dem zweiten Ende (49) ausgebildet ist;
Einblasen von Inflationsluft in den zentralen Durchgang, um den heißen extrudierten Vorformling (44) aufzublasen, während sich der heiße extrudierte Vorformling (44) in dem länglichen Formenhohlraum (48) befindet;
**gekennzeichnet durch**
dasZusammenfügen eines ersten Füllstutzenteils (26) mit dem ersten Ende (47) des heißen extrudierten Vorformlings (44) nach dem Aufblasen des heißen extrudierten Vorformlings (44), wobei das Material des Vorformlings, das den heißen extrudierten Vorformling (44) bildet,
auf eine Temperatur über einem Schmelzpunkt des Bauteilmaterials erwärmt wird, welches das erste Füllstutzenteil (26) bildet, um die mit dem heißen extrudierten Vorformling (44) verbundene Wärme zu dem ersten Füllstutzenteil (26) zu leiten, um einiges von dem in dem Füllstutzenteil (26) enthaltenen Bauteilmaterial zu schmelzen und zu bewirken, dass sich einiges von dem Bauteilmaterial mit dem Materials des Vorformlings in dem ersten Ende (47) des heißen extrudierten Vorformlings (44) verbindet, so dass sich zwischen den zusammengefügten Bereichen des heißen extrudierten Vorformlings (44) und des ersten Füllstutzenteils (26) eine Bindung entwickelt, während der heiße extrudierte Vorformling (44) und das erste Füllstutzenteil (26) abkühlen, um das erste Füllstutzenteil (26) an dem ersten Ende (47) des Vorformlings zu verankern.

2. Verfahren nach Anspruch 1, ferner umfassend den Schritt des Zusammenfügens eines zweiten Füllstutzenteils (24) mit dem zweiten Ende (49 des heißen extrudierten Vorformlings (44) nach dem Aufblasen des heißen extrudierten Vorformlings (44), wobei Material des Vorformlings, das den heißen extrudierten Vorformling (44) umfasst, auf eine Temperatur über einem Schmelzpunkt des Bauteilmaterials erwärmt wird, welches das zweite Füllstutzenteil (24) umfasst, um die mit dem heißen extrudierten Vorformung (44) verbundene Wärme zu dem zweiten Füllstutzenteil (24) zu leiten, um einiges von dem in dem Füllstutzenteil (24) enthaltenen Bauteilmaterials zu schmelzen und zu bewirken, dass sich einiges von dem Bauteilmaterial mit dem Material des Vorformlings in dem zweiten Ende (49) des heißen extrudierten Vorformlings (44) verbindet, so dass sich zwischen den zusammengefügten Teilen des heißen extrudierten Vorformlings (44) und des zweiten Füllstutzenteüs (24) eine Bindung entwickelt, während der heiße extrudierte Vorformling (44) und das zweite Füllstutzenteil (24) abkühlen, um das zweite Füllstutzenteil (26) an dem zweiten Ende (49) des Vorformlings zu verankern.

3. Verfahren nach Anspruch 1, wobei der Schritt des Zusammenfügens ferner den Schritt des Montierens des ersten Füllstutzenteils (26) an einer Aufspannvorrichtung (60) und das Bewegen der Aufspannvorrichtung (60) durch eine in dem ersten Ende des heißen extrudierten Vorformlings (44) gebildete Öffnung in den in dem heißen extrudierten Vorformling (44) gebildeten zentralen Durchgang umfasst, um einen Abschnitt des ersten Füllstutzenteils in dem zentralen Durchgang zu deponieren, um den Wärmeübergang von dem Vorformlingmaterial in dem heißen extrudierten Vorformling (44) zu dem Bauteilmaterial des ersten Füllstutzenteils zu erleichtern, das sich in dem zentralen Durchgang des heißen extrudierten Vorformlings (44) befindet.

4. Verfahren nach Anspruch 3, wobei der Schritt des Zusammenfügens ferner den Schritt des Lösens der Aufspannvorrichtung (60) von dem ersten Füllstutzenteil (26) umfasst, nachdem der Vorformling (44) und die Bauteilmaterialen abgekühlt sind und sich verbunden haben, um das erste Füllstutzenteil (26) mit dem Vorformling (44) zu verbinden.

5. Verfahren nach Anspruch 1, wobei der Verwendungsschritt ferner die Schritte des Einführens des heißen extrudierten Vorformlings (44) durch einen ersten Hohlraumeinlass, der in einem Ende des länglichen Formenhohlraums (48) gebildet ist, in den länglichen Formenhohlraum (48) umfasst, während das erste Gesenk (51) mit dem zweiten Gesenk (52) zusammengefügt und durch eine zweite Hohlraumöffnung (48"), die in einem gegenüberliegenden Ende des länglichen Formenhohlraums gebildet ist, ein Vakuum (46) angewendet wird, während das erste Gesenk (51) mit dem zweiten Gesenk (52) zusammengefügt wird, um den heißen extrudierten Vorformling (44) durch den länglichen Formenhohlraum (48) in einer Richtung hin zu dem zweiten Hohlraumeinlass (48") zu bewegen.

6. Verfahren nach Anspruch 5, wobei der Einbringungsschritt endet, bevor der Blasschritt beginnt, und wobei die Inflationsluft (50) durch den ersten Hohlraumeinlass in den zentralen Durchgang (54) des heißen extrudierten Vorformlings (44) geblasen wird.

7. Verfahren nach Anspruch 1, wobei das erste Gesenk (51) und das zweite Gesenk (52) jeweils eine halbrunde Oberfläche aufweisen, die einen Grenzbereich des länglichen Formenhohlraums bildet, und wobei die Inflationsluft (50) den heißen extrudierten Vorformling (44) in sich radial nach außen erstreckenden Richtungen expandiert, um sich an die halbrunden Oberflächen des ersten Gesenks (51) und des zweiten Gesenks (52) zu fügen, während das erste Gesenk (51) mit dem zweiten Gesenk (52) zusammengefügt wird.

8. Verfahren nach Anspruch 7, wobei der Schritt des Zusammenfügens ferner den Schritt des Montierens des ersten Füllstutzenteils (26) an einer Aufspannvorrichtung (60) und des Bewegens der Aufspannvorrichtung (60) durch eine in dem zweiten Ende (49) des heißen extrudierten Vorformlings (44) gebildete Öffnung in den in dem heißen extrudierten Vorformling (44) gebildeten Durchgang (54) umfasst, um einen Abschnitt des ersten Füllstutzenteils in dem zentralen Durchgang (54) zu deponieren, um den Übergang von Wärme von dem Vorformlingmaterial in dem heißen extrudierten Vorformling auf das Bauteilmaterial des ersten Füllstutzenteils (26) zu erleichtern, das sich in dem zentralen Durchgang (54) des heißen extrudierten Vorformlings (44) befindet.

9. Verfahren nach Anspruch 8, wobei der Schritt des Zusammenfügens ferner den Schritt des Lösens der Aufspannvorrichtung (60) von dem ersten Füllstutzenteil (26) umfasst, nachdem die Materialien des Vorformlings und des Bauteils abgekühlt sind und sich verbunden haben, um das erste Füllstutzenteil (26) an dem Vorformling (44) zu verankern.

10. Verfahren nach Anspruch 1, wobei das erste Füllstutzenteil (26) ein Einlassbecher mit einer Halterung (38) und einem Durchflussbegrenzer (40) ist, der mit der Halterung verbunden und mit einer Öffnung (42) ausgebildet ist, wobei Außenbereiche der Halterung (38) aus einem Material mit geringer Durchlässigkeit hergestellt sind, das sich mit einem Material mit geringer Durchlässigkeit verbindet, das für die Herstellung des heißen extrudierten Vorformlings (44) verwendet wird.

11. Verfahren nach Anspruch 10, wobei das eine geringe Durchlässigkeit aufweisende Material der Außenbereiche der Halterung und das Material mit geringer Durchlässigkeit, das für die Herstellung des heißen Vorformlings (44) verwendet wird, Flüssigkristallpolyethylen enthält.

12. Verfahren nach Anspruch 1, wobei die Materialien, die den heißen Vorformling (44) und das erste Füllstutzenteil (26) umfassen, Materialien enthalten, die eine geringe Durchlässigkeit aufweisen und die für Blasformen geeignet sind.

13. Verfahren nach Anspruch 1, ferner umfassend den Schritt des Bereitstellens eines zweiten Bauteils (24), wobei der Verbindungsschritt den Schritt des Bereitstellens eines ersten Gesenks (51) und eines zweiten Gesenks (52) umfasst, die zueinander passende Gegenstücke bilden und zusammenwirken, um einen Teil der geschlossenen Blasform (28) und einen Formenhohlraum zwischen sich zu bilden, wobei das erste und das zweite Gesenk jeweils eine Oberfläche aufweisen, die dem heißen Vorformling (44) und dem anderen Gesenk zugekehrt ist, und wobei der Verbindungsschritt ferner den Schritt des Aufblasens des heißen Vorformlings (44) in sich radial nach außen erstreckenden Richtungen umfasst, um sich an die in dem ersten Gesenk und in dem zweiten Gesenk gebildeten Oberflächen anzufügen und um das erste Bauteil (26), während der VorFormling heiß ist, mit dem oberen Ende des heißen Vorformlings (44) zu verbinden und um das zweite Bauteil (24) mit einem untern Ende des heißen Vorformlings (44) zu verbinden, um das Schmelzen eines Abschnitts des ersten und des zweiten Bauteils, der mit dem heißen Vorformling (44) in Kontakt ist, zu bewirken, so dass sich zwischen dem heißen Vorformling (44) und jedem des ersten und des zweiten Bauteils eine Bindung entwickelt, während die den Vorformling und das erste und das zweite Bauteil enthaltenden Materialien während ihrer Abkühlung fest werden.

14. Verfahren nach Anspruch 13, wobei das erste Bauteil (26) ein Einlassbecher, das zweite Bauteil (24) ein Einlass-Rückschlagventil ist und die den heißen Vorformling (44), den Einlassbecher und das Einlass-Rückschlagventil umfassenden Materialien Materialien mit geringer Durchlässigkeit enthalten, die für Blasformen und für die Verbindung des Einlassbechers und des Einlassrückschlagventils mit dem heißen Vorformling (44) geeignet sind.

15. Verfahren nach Anspruch 14, wobei der Einlassbecher (26) aus einem oder mehreren der Materialien Polyethylen und Acetal hergestellt ist und wobei der heiße Vorformling (44) aus Flüssigkristallpolyethylen hergestellt ist.

16. Verfahren nach Anspruch 1, wobei der Verbindungsschritt den Schritt des Bereitstellens eines ersten Gesenks (51) und eines zweiten Gesenks (52) umfasst, die zueinander passende Gegenstücke bilden und zusammenwirken, um einen Teil der geschlossenen Blasform (28) und einen Formenhohlraum zwischen den Gesenken zu bilden, wobei das erste Gesenk (51) und das zweite Gesenk (52) jeweils eine Oberfläche aufweisen, die dem anderen Gesenk zugekehrt ist, und wobei der Verbindungsschritt ferner den Schritt des Positionierens des ersten Bauteils (26) als Insert in der geschlossenen Blasform (28) und des Saugen eines Vakuums durch das erste Bauteil (26) umfasst, um das erste Bauteil in der geschlossenen Blasform mit dem heißen Vorformling zusammenzufügen.

## Revendications

1. Procédé de couplage d'un composant à un tube de remplissage de carburant,
procédé comprenant les étapes suivantes :
- on fournit une cavité de moule, allongée, (48) entre une première matrice de moule (51) adaptée à une seconde matrice de moule (52),
- on utilise le vide (46) pour tirer une paraison (44) extrudée à chaud dans la cavité allongée du moule, la paraison extrudée à chaud (44) étant formée avec une première extrémité (47) et une seconde extrémité (49), opposées ainsi qu'un passage central entre la première extrémité (47) et la seconde extrémité (49),
- on souffle de l'air de gonflement dans le passage central pour gonfler la paraison extrudée, chaude (44) pendant qu'elle est dans la cavité de moule allongée (48),
procédé **caractérisé en ce que**
on ajuste un premier composant de bouchon de col (26) à la première extrémité (47) de la paraison extrudée à chaud (44) après gonflement de la paraison extrudée à chaud (44), la matière de la paraison formant la paraison extrudée à chaud (44) ayant été chauffée à une température supérieure au point de fusion du composant constituant le premier composant de bouchon de col de remplissage (26), pour transférer la chaleur associée à la paraison extrudée à chaud (44) au premier composant de bouchon de col de remplissage (26) pour faire fondre certains des composants de matière contenus dans le premier composant de bouchon de col (26) et pour ajuster certains des composants avec la matière de la paraison à la première extrémité (47) de la paraison (44) extrudée à chaud pour développer une liaison entre les parties ajustées de la paraison extrudée à chaud (44) et le premier composant de bouchon de col de remplissage (26), lorsque la paraison extrudée à chaud (44) et le premier composant de bouchon de col (26) refroidissent l'accrochage du premier composant de bouchon de col (26) vers la première extrémité (47) de la paraison.

2. Procédé selon la revendication 1,
comprenant en outre :
l'étape consistant à maintenir un second composant de bouchon de col (24) dans la seconde extrémité (49) de la paraison extrudée à chaud (44) après gonflement de la paraison extrudée à chaud (44),
la matière de la paraison formant la paraison extrudée à chaud (44) ayant été chauffée à une température supérieure au point de fusion de la matière du composant, du second composant de bouchon de col de remplissage (24) pour transférer la chaleur associée au lot de la paraison extrudée (44) au second composant de bouchon de col (24) pour faire fondre une partie de la matière du composant contenue dans le second composant de bouchon de col (24) et faire qu'une partie de la matière du composant s'adapte à la matière de la paraison de la seconde extrémité (49) de la paraison extrudée à chaud (44) pour développer une liaison entre les parties ajustées de la paraison extrudée à chaud (44) et du second composant de bouchon de col de remplissage (24) pendant que la paraison extrudée à chaud (44) et le second composant de bouchon de col (24) refroidissent l'accrochage du second composant de bouchon de col de remplissage vers la seconde extrémité (49) de la paraison.

3. Procédé selon la revendication 1,
**caractérisé en ce que**
l'étape d'ajustage comprend en outre les étapes de montage du premier composant de bouchon de col (26) sur une fixation (60) et déplacement de la fixation (60) dans le passage central réalisé dans la paraison extrudée à chaud (44) à travers une ouverture formée dans la première extrémité de la paraison extrudée à chaud (44) pour déposer une partie du premier composant de bouchon de col dans le passage central et faciliter l'échange de chaleur entre la matière de la paraison et la paraison extrudée à chaud (44) vers le premier composant de bouchon de col situé dans le passage central de la paraison extrudée à chaud (44).

4. Procédé selon la revendication 3,
**caractérisé en ce que**
l'étape d'ajustage comporte en outre l'étape de séparation du moyen de fixation (60) par rapport au premier composant de bouchon de col (26) après refroidissement de la paraison (44) et du composant de la matière et fixation au moyen d'ancrage du premier composant de bouchon de col (26) à la paraison (44).

5. Procédé selon la revendication 1,
**caractérisé en ce que**
l'étape d'utilisation comporte en outre les étapes d'introduction d'une paraison extrudée à chaud (44) dans la cavité de moule allongée (48) à travers une première entrée de cavité réalisée à une extrémité de la cavité de moule allongée (48) pendant que la première matrice de moule (54) est ajustée à la seconde matrice de moule (52) et appliquer le vide (46) à la paraison extrudée à chaud (44) à travers la seconde entrée de la cavité (48") formée à l'extrémité opposée de la cavité de moule allongée pendant que la première matrice de moule (51) est ajustée à la seconde matrice de moule (52) pour déplacer la paraison extrudée à chaud (44) à travers la cavité de moule allongée (48) dans une direction vers la seconde entrée de cavité (48").

6. Procédé selon la revendication 5,
**caractérisé en ce que**
l'étape d'application se termine avant que l'on commence l'étape de soufflage, et
l'air de gonflement (50) est soufflé à travers l'entrée de la première cavité dans le passage central (54) de la paraison extrudée à chaud (44).

7. Procédé selon la revendication 1,
**caractérisé en ce que**
chacune des premières et secondes matrices de moule (51, 52) a une surface semi-arrondie formant une partie limite de la cavité de moule allongée, et
l'air de gonflement (50) expanse la paraison extrudée à chaud (44) radialement vers l'extérieur pour s'adapter aux surfaces semi-rondes de la première matrice (51) et de la seconde matrice (52), la première matrice (51) du moule étant ajustée à la seconde matrice de moule (52).

8. Procédé selon la revendication 7,
**caractérisé en ce que**
l'étape d'ajustement comprend en outre les étapes de montage du premier composant de bouchon de col de remplissage (26) sur un moyen de fixation (60) et déplacement du moyen de fixation (60) dans le passage central (54) formé dans la paraison extrudée à chaud (44) à travers une ouverture constituant la seconde extrémité (49) de la paraison extrudée à chaud (44) pour déposer une partie du premier composant de bouchon de col de remplissage dans le passage central (54) et faciliter l'échange de chaleur entre la matière de la paraison dans la paraison extrudée à chaud (44) vers la matière du premier composant de bouchon de col de remplissage (26) situé dans le passage central (54) de la paraison extrudée à chaud (44).

9. Procédé selon la revendication 8,
**caractérisé en ce que**
l'étape d'ajustage comprend en outre l'étape de séparation du moyen de fixation (60) par rapport au premier composant de bouchon de col de remplissage (26) après refroidissement de la paraison et des matériaux puis fixation de manière à accrocher le composant de bouchon de col de remplissage (26) à la paraison (44).

10. Procédé selon la revendication 1,
**caractérisé en ce que**
le premier composant de bouchon de col de remplissage (26) est un montage (38) comportant une coupelle d'entrée et un bec de restriction (40) couplés au montage et formés avec une ouverture (42) et les parties extérieures du montage (38) sont faites en une matière à faible perméation qui se fixe à une matière à faible perméation pour réaliser la paraison extrudée à chaud (44).

11. Procédé selon la revendication 10,
**caractérisé en ce que**
la matière à faible perméation des parties extérieures du montage et la matière à faible perméation qui donne la paraison chaude (44) contiennent du polyéthylène cristallin liquide.

12. Procédé selon la revendication 1,
**caractérisé en ce que**
la matière formant la paraison chaude (44) et le composant de bouchon de col de remplissage (26) contiennent une matière à faible perméation convenant pour le moulage par soufflage.

13. Procédé selon la revendication 1,
**caractérisé en ce qu'**
il comprend en outre l'étape consistant à fournir un second composant (24), et
l'étape de liaison comprend la première matrice de moule (51) et la seconde matrice de moule (52) ajustées l'une à l'autre et coopérant pour former une partie du moule creux de gonflement (28) ainsi qu'une cavité de moule, la première et la seconde matrice de moule ayant chacune une surface en regard de la paraison chaude (44) et l'autre matrice de moule, et
l'étape de liaison comprend en outre les étapes de gonflement de la paraison chaude (44) dans des directions s'étendant radialement vers l'extérieur pour adapter les surfaces formées sur la première et la seconde caractéristique de moule, et
pendant que la paraison est chaude, on ajuste le premier composant (26) à l'extrémité supérieure de la paraison chaude (44) et on ajuste le second composant (24) à l'extrémité inférieure de la paraison chaude (44) pour qu'une partie du premier et du second composant en contact avec la paraison chaude (44), fonde pour développer une liaison entre la paraison chaude (44) et le premier et le second composant lorsque la matière formant la paraison et le premier et le second composant se solidifient pendant qu'ils refroidissent.

14. Procédé selon la revendication 13,
**caractérisé en ce que**
le premier composant (26) est une coupelle d'entrée, le second composant (24) est une valve de contrôle d'entrée et la matière formant la paraison chaude (44), la coupelle d'entrée et la valve de contrôle d'entrée, comportent des matières à faible perméation convenant pour le moulage par soufflage et appropriées pour fixer la coupelle d'entrée et la valve de contrôle d'entrée à la paraison chaude (44).

15. Procédé selon la revendication 14,
**caractérisé en ce que**
la coupelle d'entrée (26) est faite en un ou plusieurs polyéthylène et acétal, et
la paraison chaude (44) est du polyéthylène cristallin liquide.

16. Procédé selon la revendication 1,
**caractérisé en ce que**
l'étape de liaison comprend l'étape consistant à fournir une première et une seconde matrice de moule (51, 52) adaptées l'une à l'autre, et coopérer pour former une partie du moule de soufflage fermé (28) et une cavité de moulage entre les matrices de moule, la première et la seconde matrice de moule (51, 52) ayant chacune une surface tournée vers l'autre matrice de moule, et
l'étape de liaison comprend en outre les étapes de positionnement du premier composant (26) comme un insert dans le moule de soufflage (28), fermé, et à faire le vide à travers le premier composant (26) pour ajuster le premier composant (26) à la paraison chaude (44) dans le moule de soufflage, fermé.
